Europäisches Patentamt

European Patent Office

Office européen des brevets

(11) Numéro de publication: **0 282 106 B1**

(12) **FASCICULE DE BREVET EUROPEEN**

(45) Date de publication de fascicule du brevet: **29.04.92**  (51) Int. Cl.5: **H04N  7/13**

(21) Numéro de dépôt: **88200185.2**

(22) Date de dépôt: **03.02.88**

(54) **Système de synchronisation sur un signal semi-numérique.**

(30) Priorité: **06.02.87 FR 8701471**

(43) Date de publication de la demande:
**14.09.88 Bulletin  88/37**

(45) Mention de la délivrance du brevet:
**29.04.92 Bulletin  92/18**

(84) Etats contractants désignés:
**DE ES FR GB IT SE**

(56) Documents cités:
**EP-A- 0 167 430**

(73) Titulaire: **PHILIPS ELECTRONIOUE GRAND PUBLIC**
**51, Rue Carnot**
**F-92150 Suresnes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE ES GB IT SE**

(72) Inventeur: **Rakhodai, Issa Société Civile**

**S.P.I.D.**
**209, rue de l'Université**
**F-75007 Paris(FR)**
Inventeur: **Couderc, Pascal Société Civile**
**S.P.I.D.**
**209, rue de l'Université**
**F-75007 Paris(FR)**
Inventeur: **Lefebvre, Serge Société Civile**
**S.P.I.D.**
**209, rue de l'Université**
**F-75007 Paris(FR)**

(74) Mandataire: **Caron, Jean et al**
**Société Civile S.P.I.D. 156, Boulevard Haussmann**
**F-75008 Paris(FR)**

Rank Xerox (UK) Business Services
(-/2.18/2.0)

# Description

L'invention concerne un système pour établir la synchronisation d'un récepteur de télévision destiné à recevoir un signal, notamment un signal de type dit "MAC", par exemple DMAC ou D2MAC, véhiculant des informations de luminance et de couleurs analogiques associées à des périodes de signal numérique, dit duobinaire, signal comportant une fois par image des paliers de tension analogiques de référence pour les niveaux noir, gris, blanc, et une partie duobinaire contenant notamment un signal de synchronisation dit "mot de synchronisation d'image", ce signal transitant dans le système via un amplificateur à gain réglable et via un dispositif d'alignement de la composante continue, le système étant muni d'un dispositif de décodage des signaux duobinaires, d'un détecteur de crêtes pour mesurer et mémoriser les valeurs de crête du signal, et de moyens pour, à partir de ces valeurs, fournir au dispositif d'alignement une donnée pour la correction de la composante continue et à l'amplificateur une donnée pour le réglage du gain, d'un dispositif pour mesurer les niveaux des susdits paliers de chaque image et de moyens pour, à partir de ces niveaux, fournir à l'amplificateur une valeur de réglage du gain, et d'un détecteur de mots pour reconnaître le mot de synchronisation d'image.

Le problème posé vient de ce que, pour détecter de façon sûre les mots de synchronisation numérique d'image, il faudrait préalablement contrôler correctement le niveau de composante dite continue du signal et son amplitude, alors que pour contrôler ces grandeurs il est prévu de se baser sur des paliers de tensions de référence que l'on ne peut exploiter qu'après avoir détecté la synchronisation.

Ces paliers de tensions de référence seront désormais brièvement appelés "paliers".

Il a été proposé des systèmes comme dans la demande de brevet européen EP-A 0.167.430, dans lesquels sont mis en oeuvre deux modes successifs de fonctionnement. D'abord les valeurs crête du signal sont mesurées. Ces valeurs étant appelées Vmax et Vmin, on peut calculer A1 = Vmax - Vmin et B1 = (Vmax + Vmin)/2. La valeur A1 donne la dynamique à partir de laquelle on règle le gain de l'amplificateur à gain réglable. La valeur B1 donne la composante dite continue, et permet d'ajuster cette dernière. Grâce au réglage grossier obtenu au cours de ce premier mode, des mots de synchronisation d'image peuvent être détectés et donc une synchronisation être obtenue à partir de laquelle il est possible de trouver les paliers de tensions de référence pour assurer un réglage exact du gain et de la composante dite continue.

L'emploi de ce système connu conduit à diverses difficultés, en effet, la reconnaissance du mot de synchronisation d'image ne signifie pas forcément que l'on soit accroché, c'est-à-dire parfaitement synchronisé, et suivant la décision prise après la reconnaissance du mot de synchronisation d'image, diverses difficultés peuvent apparaître notamment dans les cas suivants :
- on considère que l'on est accroché et le système est réellement accroché : le passage est délicat d'un mode à l'autre, il risque d'y avoir des sautes de signal.
- on considère que l'on est accroché alors qu'on ne l'est pas : dans ce cas, les paliers ne se présentent pas au moment attendu et le réglage basé sur eux est erroné.
- on préfère confirmer l'accrochage et l'on attend la reconnaissance d'un deuxième mot de synchronisation d'image : le contenu d'images pouvant donner lieu à un alignement erroné, la reconnaissance d'un deuxième mot peut être très difficile.

L'invention se propose de fournir un système dans lequel ces difficultés sont résolues. A cet effet, le système selon l'invention est remarquable en ce qu'un processeur pour gérer l'utilisation de ces différents dispositifs installe successivement trois modes de fonctionnement différents, un premier mode installé au démarrage du système dans lequel le processeur met en service le détecteur de crêtes et ses moyens associés pour régler le gain et la composante continue, et dans lequel il valide le détecteur de crêtes en permanence, un deuxième mode semblable mais dans lequel le processeur valide le détecteur de crêtes seulement pendant les périodes de signal duobinaire et pendant la ligne 624, ce mode étant installé lorsque le détecteur de mots à reconnu un mot de synchronisation d'image, et un troisième mode dans lequel le processeur met en service le dispositif pour mesurer les paliers d'image et ses moyens associés, ce mode étant installé lorsqu'un dispositif pour vérifier la position d'un mot a détecté une coïncidence entre un nouveau mot de synchronisation d'image et un signal délivré par un compteur de temps à chacun des instants successifs correspondant à des durées d'image entières après le mot de synchronisation d'image précédemment reconnu.

Le système peut en outre avantageusement être muni d'un compteur d'images, et de moyens pour faire revenir du second ou du troisième mode au premier mode lorsqu'un compte d'images déterminé est atteint sans qu'un mot de synchronisation d'image ait été correctement reconnu. Ainsi la sécurité est améliorée.

Il est préférable de faire fonctionner un dispositif basé sur les paliers de ligne durant le deuxième mode alors qu'on l'utilisera seulement après le passage dans le troisième mode. Ceci permet d'éviter une saute de signal lors du passage au troisième mode.

Dans un mode de réalisation préférentiel, le système est remarquable en ce que le signal amplifié et dont la composante continue a été ajustée est amené à un convertisseur analogique/numérique dont la valeur numérique produite est amenée au dispositif de mesure des niveaux des paliers d'image qui comporte des échantillonneurs numériques échantillonnant les niveaux de ces paliers d'image, niveaux qui sont fournis au processeur pour, durant le troisième mode, en tirer une valeur qui est amenée à un convertisseur numérique/analogique dont le signal analogique produit est appliqué à une borne de réglage de gain de l'amplificateur, en ce qu'il comporte un détecteur de crête analogique dont les signaux résultants sont amenés à un sommateur pour régler le circuit de décalage durant les deux premiers modes, et à un convertisseur analogique/numérique qui fournit les valeurs de crête sous forme numérique au processeur pour en tirer durant les deux premiers modes une valeur qui est amenée à un convertisseur numérique/analogique dont le signal analogique produit est appliqué à une borne de réglage de gain de l'amplificateur, en ce qu'il comporte un circuit câblé analogique d'alignement basé sur les paliers de ligne, et en ce que le processeur établit le troisième mode en sélectionnant par un commutateur le signal issu du circuit d'alignement, au lieu du signal issu du circuit de décalage.

Ce mode de réalisation met en oeuvre un partage avantageux entre l'utilisation de fonctions logicielles et numériques, et de fonctions matérielles câblées.

La description qui va suivre, en regard des dessins annexés décrivant des exemples non limitatifs fera bien comprendre comment l'invention peut être réalisée.

La figure 1 est un diagramme synoptique d'un mode de réalisation du système.

La figure 2 illustre des formes de signal à traiter par le système.

Les figures 3 à 5 sont des diagrammes illustrant le processus mis en oeuvre par le système.

La figure 6 est un diagramme synoptique d'une variante de réalisation du système.

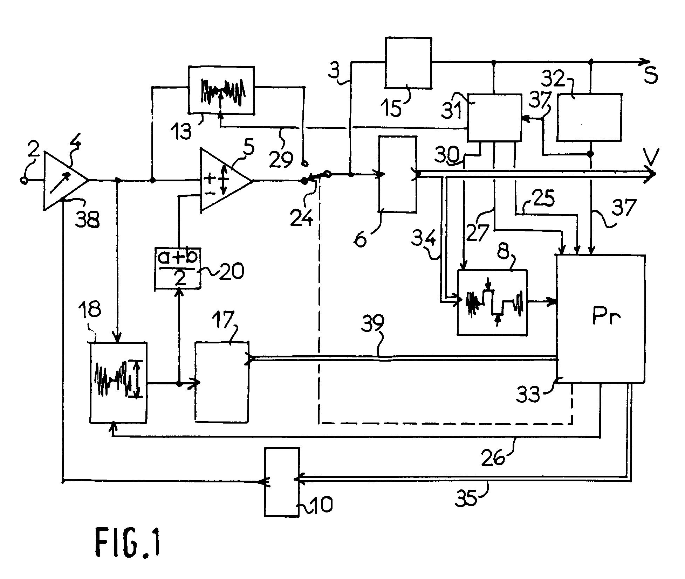

Le système représenté à la figure 1 comporte un chemin de signal allant d'une borne d'entrée 2 à une borne intermédiaire 3 en passant par un amplificateur à gain réglable 4 amplifiant le signal, suivi d'un circuit de décalage 5 pour ajuster la composante dite continue du signal, et d'un commutateur électronique 24 dont le rôle sera expliqué plus loin, et qui, dans les premier et second mode, assure la connexion représentée. La composante continue peut en pratique varier d'une ligne à l'autre par exemple s'il y a un ronflement d'alimentation, ou bien même elle est rendue variable volontairement pour améliorer la répartition d'énergie de l'émetteur. Il est donc souhaitable d'en assurer le réglage à chaque ligne. Le niveau de cette composante peut cependant être considéré comme constant durant une ligne, c'est pourquoi elle est dite continue.

Les deux circuits d'amplification et de réglage doivent être réglés avec précision pour obtenir un signal (sur la borne 3), dont les niveaux sont définis de façon absolue.

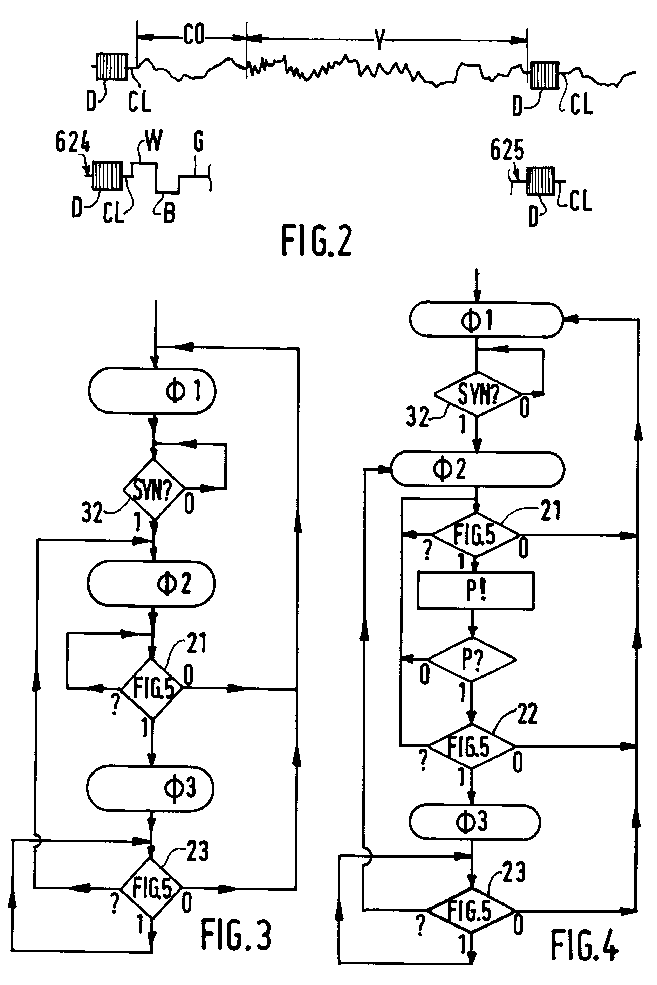

La figure 2 représente, en haut de la figure, un signal durant une ligne quelconque d'image. Il présente d'abord une période D de données numériques, dite duobinaire, dont la durée est de $10\mu s$ et qui fournit des données pour le son et la synchronisation des balayages de télévision. Il contient à cet effet des séquences de bits particulières appelées mots de synchronisation. Cette période D est suivie d'un palier CL de ligne indiquant la valeur du gris. Ce palier de ligne (dit "de clamp" dans le jargon du métier) dure seulement 0,75 $\mu s$. Il est suivi d'une période de signal analogique CO fournissant des informations de couleur, et d'une période de signal également analogique Y fournissant des informations de luminance. Ensuite arrive la période duobinaire D de la ligne suivante.

En bas de la figure 2 est représenté le début d'une ligne particulière, la ligne numéro 624, qui se présente une seule fois par image, et dans laquelle les périodes D et CL sont suivies de trois paliers de référence W, B, G, chacun d'une durée de $8\mu s$, qui indiquent respectivement les valeurs du blanc, du noir et du gris. Les données qui suivent ces paliers jusqu'à la ligne suivante ne concernent pas l'invention. La ligne suivante 625 contient le mot de synchronisation d'image.

La fonction essentielle du système est de reconnaître de façon fiable le mot de synchronisation d'image contenu dans le signal duobinaire D. Sur la figure 1 le circuit 15 relié à la borne intermédiaire 3 est un décodeur du signal duobinaire qui met en forme les données numériques et permet la récupération d'horloge. Il fournit les données numériques à un détecteur de mot 32, dont le rôle est de reconnaître le mot de synchronisation d'image. Ces circuits qui sont connus de l'homme du métier ne peuvent assurer la reconnaîssance dudit mot que si les niveaux du signal sont correctement réglés. Or pour obtenir sur la borne 3 une amplitude et une composante continue correcte, il importe de pouvoir mesurer les paliers W, B, G, CL à partir desquels est réalisé le réglage. Il faut donc savoir à quel moment les paliers se présentent, donc avoir préalablement reconnu le mot de synchronisation d'image !

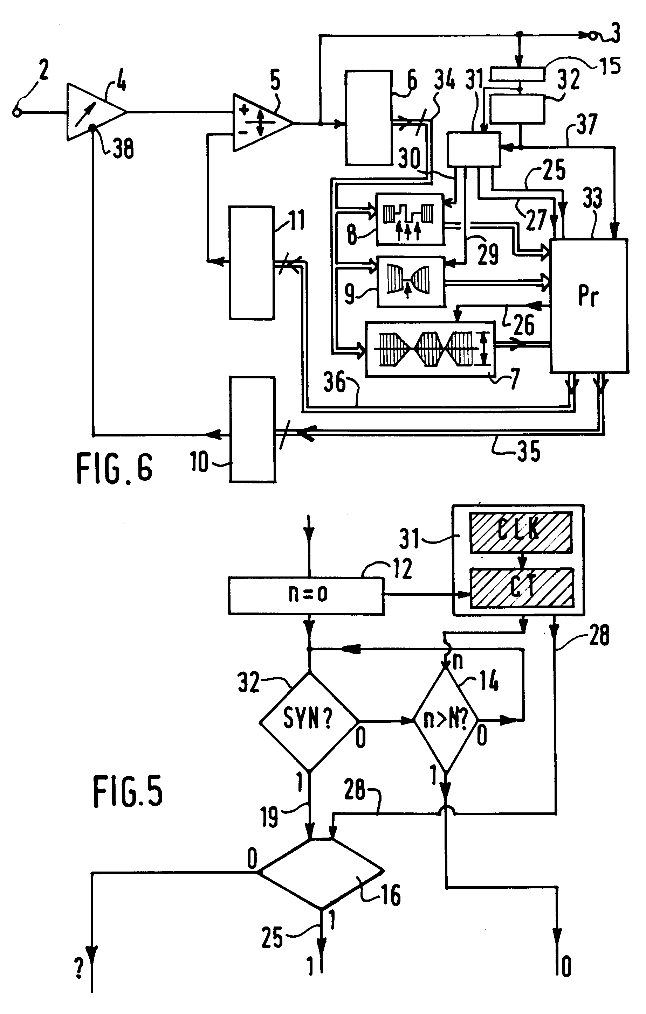

Pour sortir de ce cercle vicieux, le système est muni d'un détecteur de crêtes 18 (ou 7, figure 6) pour mesurer et mémoriser les valeurs de crête du signal. A la mise en route du système, un premier mode est installé, dans lequel les valeurs de crête sont mesurées sur l'ensemble du signal, c'est-à-dire que le détecteur de crêtes est utilisé en permanence. L'ensemble du système est géré par un processeur 33, qui comporte notamment un microprocesseur avec son logiciel spécifique, et est associé à des circuits spécialisés réalisés matériellement (que l'on appelle des circuits "câblés"). C'est donc le processeur 33 qui, à la mise en route, installe le premier mode. La différence entre les valeurs maximales et minimales représente une grandeur qui après traitement par le processeur, donne à l'amplificateur 4 une valeur de réglage du gain. Une valeur moyenne, c'est-à-dire en pratique une valeur proportionnelle à la demi somme des valeurs de crête maximales et minimales est fournie au circuit de décalage 5 pour la correction de la composante continue.

Ainsi on obtient une première estimation des valeurs de réglage. Il est à noter que l'alignement ainsi effectuée dépend du contenu d'image et il peut être erroné, excepté pour la ligne 624 et les quelques lignes suivantes, ce qui permet néanmois de reconnaître le mot de synchronisation d'image à la ligne 625.

Lorsqu'un mot de synchronisation d'image vient d'être reconnu pour la première fois par le détecteur de mot 32, ce dernier transmet au processeur par la connexion 37 un signal, grâce auquel est déclenchée la mise en service du second mode.

Dans ce second mode, la qualité de la synchronisation n'est pas encore tout à fait sûre, puisqu'on a seulement détecté un mot jusqu'à présent. Il serait sans doute hasardeux de vouloir utiliser tout de suite les paliers CL, W, B, G. On s'est aperçu qu'on peut, même sans trouver ces paliers, améliorer le réglage en utilisant le détecteur de crêtes 18 seulement pendant les périodes duobinaires. Ces dernières ont une durée assez importante ($10\mu$s), ce qui permet de les trouver plus facilement que les paliers, en particulier que le palier CL dont la durée est de $0,75\mu$s seulement. Comme les périodes duobinaires ont une amplitude crête constante et sont symétriques, bien que là encore le contenu moyen dépende de la quantité de "1" et de "0", les valeurs de crête qu'on peut en tirer sont plus précises. Ainsi dans le second mode, un ordre d'inhibition, engendré par le processeur 33 seulement en dehors des durées des signaux duobinaires et de la ligne 624, estimées d'après l'instant de détection du premier mot de synchronisation d'image, est transmis au détecteur 18 par la connexion d'inhibition 26. Quand le détecteur 18 reçoit cet ordre il ne prend pas en compte les valeurs du signal.

Au cours de ce second mode, la probabilité de reconnaître un mot de synchronisation d'image est plus grande. Il est nécessaire de vérifier cependant que l'accrochage est certain. A cet effet est prévu un dispositif pour vérifier la position d'un mot, c'est-à-dire la durée entre deux mots détectés successivement. Ce dispositif comprend un compteur de temps 31 comportant une horloge et un compteur. Ce compteur est remis à zéro par le signal de la connexion 37 à chaque détection d'un mot de synchronisation d'image. Chaque fois qu'il atteint un compte correspondant à un nombre entier de durées d'image, il délivre un signal, et un comparateur vérifie s'il y a coïncidence entre ce signal et la détection d'un mot de synchonisation d'image. Lorsque cette coïncidence est constatée un ordre est transmis par la connexion 25 au processeur 33 qui installe le troisième mode.

Au cas où les mots suivant le premier ne se produisent pas au bon moment, cela signifie que la synchronisation n'est pas correcte et il se peut alors que la soit disant période duobinaire soit en fait une période quelconque, auquel cas le second mode est inadapté. Pour tenir compte de cela le compteur de temps 31 comporte en outre un compteur d'images, qui envoie au processeur via une connexion 27, des tops à chaque instant où l'on attend une nouvelle image. Si un nombre prédéterminé de tops est reçu sur la connexion 27 sans que la coïncidence mentionnée plus haut ait été détectée, produisant un top sur la connexion 25, le processeur 33 réinstalle à nouveau le premier mode. Ceci est réalisé par logiciel. En outre le même effet peut aussi se produire à partir du troisième mode.

Le susdit nombre prédéterminé est établi par le processeur. Il peut être un nombre arbitraire. Dans une version perfectionnée du système, ce nombre peut aussi être calculé par le processeur en fonction du niveau de bruit. Le bruit peut être mesuré par un circuit connu, non représenté. Bien entendu il faut, pour que cette mesure du bruit soit possible, que la synchronisation ait été obtenue. Ce procédé ne peut donc être utilisé que dans le cas où l'on serait repassé au second mode après avoir préalablement atteint le troisième mode.

Lorsque le troisième mode est installé, les paliers sont de préférence seuls utilisés pour fournir les valeurs de réglage. Le réglage de la composante continue est alors réalisé par un dispositif d'alignement 13 sur les paliers de ligne CL. Dans la forme de réalisation préférée ce dispositif d'alignement 13 est connecté en parallèle sur le dispositif de décalage 5. Ce dispositif d'alignement 13 appelé "de clamp dynamique" est semblable à celui utilisé dans les téléviseurs ordinaires. Le signal aligné est transmis par le commutateur 24 commandé par le processeur 33 qui, dans le troisième mode, connecte la sortie du dispositif d'alignement 13. Un top issu du compteur de temps 31 est fourni au dispositif d'alignement 13 au moment opportun. Lorsqu'il reçoit ce top, le dispositif d'alignement 13 aligne le signal.

Par ailleurs un dispositif 8 de mesure des paliers d'image reçoit sur une connexion 30 un top de synchronisation à partir duquel il enregistre les trois valeurs du signal pour les paliers W, B, G. Le résultat de la mesure des paliers d'image par le dispositif de mesure 8 est utilisé de préférence par le processeur 33 pour établir, dans le troisième mode, la valeur de réglage de gain de l'amplificateur 4.

Si l'on met en service les dispositifs basés sur les paliers au moment où l'on passe au troisième mode, ils risquent de fournir des valeurs erronées parce qu'il leur faut un certain temps pour fournir des valeurs correctes. Il est donc avantageux que le dispositif d'alignement 13 basé sur les paliers de ligne soit déjà mis en fonctionnement dès le second mode pour être utilisable immédiatement lors du passage dans le troisième mode. Comme c'est précisément le fait que la dernière image reçue ait été correctement synchronisée qui entraîne le passage au troisième mode, les mesures faites sur les paliers pendant cette dernière image précédant le passage au troisième mode sont donc correctes et utilisables immédiatement.

Dans la forme de réalisation préférée, le dispositif de mesure 8 est réalisé sous la forme d'un circuit numérique. Le signal amplifié et dont la composante continue a été ajustée, disponible sur la borne 3, est amené à un convertisseur analogique/numérique 6 dont la valeur numérique produite est amenée, par une connexion à plusieurs conducteurs 34, au dispositif de mesure 8, qui est un échantillonneur numérique enregistrant la valeur numérique du signal sur la connexion 34 au moment précis des paliers respectifs concernés, moment qui est indiqué par le compteur de temps 31 via la connexion 30. Le dispositif de mesure 8 mémorise ces valeurs et les fournit au processeur 33. Durant le troisième mode, ce dernier calcule, à partir des valeurs des paliers de blanc et de noir issus du dispositif de mesure 8, une valeur numérique qui est fonction de l'amplitude du signal et qui est fournie à un convertisseur numérique/analogique (N/A) 10 qui produit un signal analogique qui est appliqué à une borne de réglage 38 du gain de l'amplificateur 4.

Quant au détecteur de crêtes 18 qui traite le signal sortant de l'amplificateur 4, c'est un circuit analogique réalisable de façon simple et connue : il comporte essentiellement un système de redressement avec un condensateur. Il fournit les valeurs des maximums et des minimums, par exemple en tant que signaux de sortie de détecteurs respectivement à détection positive et à détection négative. Les niveaux de ces signaux sont maintenus dans des condensateurs, et un circuit 20 additionneur analogique, par exemple un simple réseau de résistances, fournit la demi somme des niveaux en question à l'entrée "-" du circuit de décalage 5 pour régler la composante continue dans les premier et second modes.

Les niveaux maximum et minimum établis par le détecteur de crêtes 18 sont en outre convertis en valeurs numériques dans un convertisseur analogique/numérique 17. Les valeurs de crête mémorisées dans les condensateurs évoluent lentement et le convertisseur 17 n'a donc pas besoin d'être un modèle rapide. Les valeurs numérisées sont fournis par la connexion 39 au processeur 33. Ce dernier, dans les premier et second modes, calcule leur différence, qui représente l'amplitude du signal sortant de l'amplificateur 4, et en déduit une valeur numérique appropriée qui est fournie au convertisseur numérique/analogique 10 comme dans le troisième mode. Le passage des modes 1 et 2 au mode 3 est donc réalisé simplement en se basant sur les valeurs issues du dispositif de mesure 8 au lieu de celles issues du convertisseur 17.

Dans les figures 3, 4 et 5 certaines des références désignent aussi bien une opération que le matériel chargé de cette opération dans la figure 1. A la sortie des losanges symbolisant un test, les références 0, 1, ? signifient respectivement "NON", "OUI", "PEUT ETRE".

La figure 3 permet de mieux visualiser le processus mis en oeuvre par le système et déjà décrit ci-dessus.

Le processus débute en haut de la figure par la mise dans le premier mode ($\phi 1$). Ensuite le losange "SYN ?" sym bolise la recherche d'un mot de synchronisation d'image. Il porte aussi la référence 32 qui est celle du détecteur de mot de la figure 1. Tant que ce mot n'est pas reconnu (0), la recherche continue. Lorsque ce mot est reconnu (1) le second mode est enclenché ($\phi 2$). Alors est mis en oeuvre un test plus complet 21 (fig 5) qui peut fournir 3 réponses. Si la réponse est "NON" (0) le premier mode est réenclenché ($\phi 1$). Si la réponse est "PEUT ETRE" (?) le test est poursuivi. La réponse "OUI"(1) entraîne l'installation $\phi 3$ du troisième mode. Après être passé dans le troisième mode le test 23 (fig. 5) identique au test 21 réalisé entre les second et troisième mode est à nouveau réalisé. La réponse "OUI" (1) conduit à poursuivre le test, ce qui se produit donc en permamence tant que le troisième mode est en service, la réponse NON(0) entraîne le réenclenchement direct du premier mode, sans repasser par le second mode. Enfin la réponse "PEUT ETRE"(?) entraîne l'installation φ2 du second mode.

Il existe un cas particulier, dans lequel la position des paliers de clamp n'est pas connue à l'avance, c'est-à-dire qu'elle n'est pas définie dans la norme d'émission. Elle est alors indiquée pendant l'émission par une donnée numérique incluse dans la période duobinaire. Le diagramme de la figure 4 visualise le processus à mettre en oeuvre dans ce cas. Il est identique à celui de la figure 3, excepté en ce qui concerne une opération symbolisée P!, un test P?, et un test 22 qui est toujours le test de la figure 5. La réponse OUI(1) du test 21 n'entraîne plus maintenant directement l'installation du troisième mode mais celle du nouvel ensemble d'opérations. L'opération P! désigne la recherche d'un groupe de bits définissant la position des paliers. Le test P? répond OUI ou NON à la question "a-t-on trouvé la position ?". Si la réponse est NON le test 21 est a nouveau demandé, si elle est OUI un test 22 est réalisé qui est de même nature (fig. 5) que le test 21. Les résultats 0 et ? du test 22 produisent le même effet que ceux du test 21. Le résultat 1 du test 22 entraîne l'installation φ3 du troisième mode.

La figure 5 illustre en détail l'ensemble d'opérations symbolisées par chaque losange 21, 22, 23 sur les figures 3 et 4. Au début du test un nombre n indiquant un nombre de trames est remis à zéro. Ceci signifie en pratique que le compteur d'image CT du compteur de temps 31 est remis à zéro, puis un mot de synchronisation d'image est recherché (SYN ?) par le détecteur de mots 32. Tant qu'aucun mot n'est trouvé (0) le test n>N? est réalisé, c'est-à-dire : "est-ce que le nombre n d'images comptées par le compteur CT est plus grand qu'un nombre prédéterminé N?", si la réponse à ce test interne 14 est OUI(1) la sortie NON(0) du test global de la figure 5 est activée. Si elle est NON(0) la recherche SYN? est entreprise à nouveau. Lorsqu'un mot de synchronisation d'image est trouvé (1) un top est fourni à l'entrée 19 du test 16. Par ailleurs un top est envoyé sur l'entrée 28 par le compteur d'image CT à chacun des instants successifs où l'on attend un mot de synchronisation d'image, instants déterminés à partir du mot de synchronisation d'image précédemment détecté. Le test 16 recherche si un top apparait en même temps sur les deux entrée 19 et 28. Si ce n'est pas le cas (0), la sortie "?" du test global de la figure 5 est activée. Si c'est le cas, c'est la sortie 1 du test global qui est activée. Le test 16 est réalisé par un circuit cablé qui constitue un dispositif pour vérifier la position d'un mot de synchronisation d'image, et qui, sur la figure 1, est considéré comme compris dans le compteur de temps 31, et envoie son résultat au processeur par la connexion 25.

Les bits de la partie duobinaire se présentent à une cadence d'environ 10 MHz. Un microprocesseur ordinaire n'est pas capable de traiter des données à cette fréquence. Pour cette raison le circuit détecteur de mots 32 utilise des moyens matériels c'est à dire câblés. Il en est de même pour les circuits de test réalisant les tests 16 et SYN? de la figure 5 et pour les circuits 31 d'horloge et de compteur. Le détecteur de crête 18 et le dispositif de mesure 8 comportent à la fois des fonctions cablées et des fonctions assurées par logiciels. Le détecteur de crête 18 comporte un filtre passe bas pour éliminer les parasites qui fausseraient la mesure. La gestion d'ensemble du processus et le test n>N? sont réalisés par les moyens logiciels du processeur 33. Il a été précisé plus haut que dans le troisième mode, on utilisait "de préférence" les niveaux des paliers. En pratique le troisième mode est essentiellement défini comme celui où l'on est sûr de l'accrochage après être passé par le second mode, dans lequel on utilisait exclusivement les données des crêtes mesurées dans des fenêtres de temps. Dans ce troisième mode, le processeur n'est plus limité à l'emploi des mesures de crête, il est "autorisé" à mettre en service les dispositifs de mesure 8 et d'alignement 13 décrits plus haut, mais il dispose toujours des données fournis par le détecteur de crêtes 18 et peut décider d'employer celles qui donnent les meilleurs résultats : il n'est pas exclu, par exemple en cas de signal très bruité parasitant les niveaux des paliers de ligne, de modifier le troisième mode pour par exemple assurer l'alignement au moyen du détecteur de crêtes 18 et de ses moyens associés, à savoir le circuit de décalage 5 et le circuit additioneur 20, cependant que le dispositif de mesure 8 de paliers d'image est normalement utilisé pour le réglage du gain (10, 38, 4), ou bien inversement, de régler le gain à partir des données de crête issues du convertisseur A/N 17, cependant que le dispositif d'alignement 13 est normalement enclenché par le commutateur 24. Le processeur installe donc le troisième mode comme indiqué, mais peut ensuite selon les circonstances, mettre en place des variantes.

Dans une autre forme de réalisation, qui est représentée à la figure 6, le détecteur de crêtes 7, le dispositif 8 de mesure des paliers d'image et un dispositif 9 de mesure des paliers de ligne sont réalisés sous la forme de circuits numériques. Le signal amplifié et dont la composante continue a été ajustée, disponible sur la borne 3, est amené à un convertisseur analogique/numérique 6 dont la valeur numérique produite est amenée, par une connexion à plusieurs conducteurs 34, au détecteur de crêtes 7. Ce détecteur de crêtes 7 piloté par l'horloge, est muni de moyens pour lire périodiquement la valeur numérique présente sur la connexion 34, la comparer à une première valeur mémorisée, et remplacer cette dernière par la valeur lue au cas ou elle est plus grande qu'elle, et de même vis à vis d'une deuxième valeur mémorisée, au cas où elle est plus petite qu'elle. Ces deux valeurs mémorisées sont présentées en permanence au processeur 33. Ce dernier déduit de leur différence une première valeur qui représente l'amplitude et de leur somme une deuxième valeur qui représente la composante continue. La première valeur est amenée au convertisseur numérique/analogique 10 qui produit un signal analogique qui est appliqué à une borne de réglage 38 du gain de l'amplificateur. La deuxième valeur est amenée à un convertisseur numérique/analogique 11 qui produit un signal analogique appliqué à une borne "-" de réglage du décalage dans le circuit de décalage 5.

Ladite valeur numérique produite par le convertisseur 6 est également amenée aux dispositifs de mesure 8 et 9 qui sont des échantillonneurs numériques enregistrant la valeur numérique du signal sur la connexion 34 au moment précis des paliers respectifs les concernant, moment qui est indiqué par le compteur de temps 31 via les connexions 29 et 30. Les dispositifs de mesure 8, 9 mémorisent ces valeurs et les fournissent au processeur 33. Durant le troisième mode, ce dernier calcule à partir des valeurs fournies par le dispositif de mesure 8, c'est à dire notamment les valeurs des paliers de blanc et de noir, une première valeur numérique qui est fonction de l'amplitude du signal et qui est fournie au convertisseur 10 comme précédemment. A partir des valeurs fournies par le dispositif de mesure 9, c'est-à-dire à chaque ligne la valeur du palier de gris, le processeur calcule une deuxième valeur numérique qui est fonction de la composante continue du signal, et qui est amenée au convertisseur numérique/analogique 11 dont le signal de sortie commande le circuit de décalage 5 comme précédemment.

Dans cette forme de réalisation, le dispositif d'alignement 13 basé sur les paliers de lignes n'est pas distinct du circuit de décalage 5, et c'est l'origine des signaux de commande qui change selon le mode. Le dispositif d'alignement 13 de la figure 1 alors n'existe plus et le commutateur 24 n'a plus de raison d'être. Cette forme de réalisation exige aujourd'hui des circuits plus coûteux que ceux du schéma de la figure 1, en particulier pour les circuits numériques 7 et 9 qui doivent être particulièrement rapides. Mais l'évolution de la technique vers l'emploi systématique de circuit numériques pourrait inverser les données du problème.

## Revendications

1. Système pour établir la synchronisation d'un récepteur de tévision destiné à recevoir un signal véhiculant des informations de luminance et de couleur analogiques associées à des périodes de signal numérique, dit duobinaire, signal comportant une fois par image des paliers de tension analogiques de référence pour les niveaux noir, gris, blanc, et une partie duobinaire contenant notamment un signal de synchronisation dit "mot de synchronisation d'image", ce signal transitant dans le système via un amplificateur (4) à gain réglable et via un dispositif d'alignement de la composante continue (5, 13), le système étant muni d'un dispositif (15) de décodage des signaux duobinaires, d'un détecteur de crêtes (18, 7) pour mesurer et mémoriser les valeurs de crête du signal, et de moyens associés pour, à partir de ces valeurs, fournir au dispositif d'alignement une donnée pour la correction de la composante continue et à l'amplificateur (4) une donnée pour le réglage du gain, d'un dispositif de mesure (8) pour mesurer les niveaux des susdits paliers de chaque image et de moyens associés pour, à partir de ces niveaux, fournir à l'amplificateur (4) une valeur de réglage du gain, et d'un détecteur de mots (32) pour reconnaître le mot de synchronisation d'image, caractérisé en ce qu'un processeur pour gérer l'utilisation de ces différents dispositifs installe successivement trois modes de fonctionnements différents, un premier mode installé au démarrage du système dans lequel le processeur met en service le détecteur de crêtes et ses moyens associés pour régler le gain et la composante continue, et dans lequel il valide le détecteur de crêtes en permanence, un deuxième mode semblable mais dans lequel le processeur valide le détecteur de crêtes seulement pendant les périodes de signal duobinaire et pendant la ligne 624, ce mode étant installé lorsque le détecteur de mots (32) a reconnu un mot de synchronisation d'image, et un troisième mode dans lequel le processeur est autorisé à mettre en service le dispositif pour mesurer les paliers d'image et ses moyens associés, ce mode étant installé lorsqu'un dispositif (16) pour vérifier la position d'un mot a détecté une coïncidence entre un nouveau mot de synchronisation d'image et un signal délivré par un compteur de temps (CT) à chacun des instants successifs correspondant à des durées d'image entières après le mot de synchronisation d'image précédemment reconnu.

2. Système selon la revendication 1, caractérisé en ce qu'il est muni de moyens (14) pour faire revenir du second ou du troisième mode au premier mode lorsqu'un compte d'images déterminé par un compteur d'images (CT) est atteint sans que le dispositif (16) pour vérifier la position d'un mot de synchronisation d'image ait détecté une coïncidence.

3. Système selon la revendication 2, caractérisé en ce qu'il est muni de moyens de mesure du bruit et de moyens pour calculer le susdit compte d'images déterminé en fonction du niveau du bruit.

4. Système selon l'une quelconque des revendications précédentes caractérisé en ce qu'un dispositif pour réaliser l'alignement à partir des paliers de ligne est mis en état de fonctionnement dès le deuxième mode.

5. Système selon l'une quelconque des revendications précédentes, caractérisé en ce que le signal (3) amplifié et dont la composante continue a été ajustée est amené à un convertisseur analogique/numérique (6) dont la valeur numérique produite (34) est amenée au dispositif de mesure des niveaux des paliers d'image (8) qui comporte des échantillonneurs numériques échantillonnant les niveaux de ces paliers d'image, niveaux qui sont fournis au processeur pour, durant le troisième mode, en tirer une valeur qui est amenée à un convertisseur numérique/analogique (10) dont le signal analogique produit est appliqué à une borne de réglage de gain de l'amplificateur (4).

6. Système selon l'une quelconque des revendications précédentes, caractérisé en ce qu'il comporte un détecteur de crêtes analogique (18) dont les signaux résultants sont amenés à un sommateur (20) pour régler le circuit de décalage (5) durant les deux premiers modes, et à un convertisseur analogique/numérique (17) qui fournit les valeurs de crête sous forme numérique au processeur (33) pour en tirer durant les deux premiers modes une valeur qui est amenée à un convertisseur numérique/analogique (10) dont le signal analogique produit est appliqué à une borne de réglage de gain de l'amplificateur (4)

7. Système selon la revendication 6, caractérisé en ce qu'il comporte un circuit (13) câblé analogique d'alignement basé sur les paliers de ligne, et en ce que le processeur établit le troisième mode, pour ce qui concerne le réglage de la composante continue, en sélectionnant par un commutateur (24) le signal issu du circuit d'alignement, au lieu du signal issu du circuit de décalage (5).

8. Système selon la revendication 5, caractérisé en ce que la valeur produite par le convertisseur analogique/numérique (6) est également amenée au détecteur de crêtes (7), en ce que celui-ci est un circuit numérique mémorisant les valeurs maximales et minimales, lesquelles sont amenées au processeur (33) pour, durant le premier et second mode, déduire de leur différence une première valeur (35) et de leur somme une deuxième valeur (36), qui sont respectivement amenées au susdit convertisseur numérique/analogique (10) et à un deuxième convertisseur numérique/analogique (11) dont le signal analogique produit est appliqué à une borne de réglage du circuit de décalage (5) de la composante continue, et en ce que la valeur produite par le convertisseur analogique/numérique (6) est amenée aussi à un dispositif de mesure numérique des palier de ligne (9), dont les valeurs mesurées sont fournies au processeur pour établir le troisième mode, en ce qui concerne le réglage de la composante continue, en sélectionnant les signaux issus du dispositif de mesure numérique des paliers de ligne (9), au lieu de ceux du détecteur de crêtes (7) pour en tirer la susdite deuxième valeur (36).

## Claims

1. A system for providing the synchronization of a television receiver intended to receive a signal which conveys the luminance and analog colour information components associated with periods of what is referred to as a duobinary signal, which signal comprises once in every frame analog reference voltage plateaus for the black, grey and white levels, and a duobinary portion containing more specifically a synchronization signal referred to as the "frame synchronization word", this signal passing through the system via a variable gain amplifier (4) and via a DC component aligning device (5, 13), the system including a duobinary signal decoding device (15), a peak detector (18, 7) for measuring and storing the peak values of the signal and associated means for applying, on the basis of these values, a datum for the correction of the DC component to the aligning device and a datum for the gain control to the amplifier (4), a measuring arrangement (8) for measuring the levels of said plateaus of each frame and associated means for applying, based on these levels, a gain control value to the amplifier (4), and a word detector (32) for recognizing the frame synchronization word, characterized in that a processor for managing the use of these various devices establishes, one after the other, three different modes of operation, a first mode established at the start of the system in which the processor puts the peak detector and its associated means for controlling the gain and the DC component into operation and in which it permanently enables the peak detector, a second, similar mode but in which the processor enables the peak detector only during the periods of the duobinary signal and during line 624, this mode being established when the word detector (32) has recognized a frame synchronization word, and a third mode in which the processor is authorized to put the frame plateau measuring device and its associated means into operation, this mode being established when a word position checking device (16) has detected coincidence between a new frame synchronization word and a signal supplied by a time counter (CT) at each of the consecutive instants corresponding to total frame periods after the previously recognized frame synchronization word.

2. A system as claimed in Claim 1, characterized in that it is provided with means (14) by means of which it is possible to return from the second or the third mode to the first mode when a frame count determined by a frame counter (CT) has been obtained without the arrangement (16) for checking the position of a frame synchronization word having detected a coincidence.

3. A system as claimed in Claim 2, characterized in that it is provided with noise measuring means and means for calculating said determined frame count as a function of the noise level.

4. A system as claimed in any one of the preceding Claims, characterized in that an arrangement for effecting the alignment on the basis of the line plateaus is made operative from the second mode onwards.

5. A system as claimed in any one of the preceding Claims, characterized in that the amplified signal (3) whose DC component has been adjusted is applied to an analog/digital converter (6) whose digital output value (34) is applied to the frame plateau level measuring arrangement (8) which comprises digital samplers sampling the levels of these frame plateaus, which levels are applied to the processor for deriving therefrom in the third mode a value which is applied to a digital/analog converter (10) whose analog output signal is applied to a gain control terminal of the amplifier (4).

6. A system as claimed in any one of the preceding Claims, characterized in that it includes an analog peak detector (18) whose output signals are applied to an adder (20) to control the shift circuit (5) during the first two modes, and to an analog/digital converter (17) which applies the peak values in digital form to the processor (33) to derive therefrom during the first two modes a value which is applied to a digital/analog converter (10) whose analog output signal is applied to a gain control terminal of the amplifier (4).

7. A system as claimed in Claim 6, characterized in that it includes an analog wired alignment arrangement (13) based on the line plateaus and in that the processor establishes the third mode, as regards the adjustment of the DC component, by selecting by means of a change-over switch (24) the signal originating from the alignment arrangement instead of the signal supplied by the shift circuit (5).

8. A system as claimed in Claim 5, characterized in that the value produced by the analog/digital converter (6) is also applied to the peak detector (7), in that this is a digital circuit storing maximum and minimum values, which are applied to the processor (33) for deriving, in the first and second modes a first value (35) from their difference and a second value (36) from their sum which values are applied to said digital/analog converter (10) and to a second digital/analog converter (11) whose analog output signal is applied to a control terminal of the DC component shift circuit (5), and in that the value produced by the analog/digital converter (6) is also applied to a digital line plateau measuring arrangement (9) whose measured values are applied to the processor to establish the third mode, as regards the control of the DC component, while selecting the signals supplied by the digital line plateau measuring arrangement (9) instead of the signals from the peak detector (7) to derive said second value (36) therefrom.

## Patentansprüche

1. System zum Synchronisieren eines Fernsehempfängers zum Empfangen eines Signals, das als duobinär bezeichneten digitalen Signalperioden und analoge Leuchtdichte- und Farbinformationen überträgt, wobei dieses Signal je Bild analoge Bezugsspannungspegel für die Pegel Schwarz, Grau, Weiß aufweist, sowie einen insbesondere ein als "Bildsynchronwort" bezeichnetes Synchronsignal enthaltenden duobinären Teil, wobei dieses Signal über einen Verstärker (4) mit regelbarer Verstärkung und über eine Anordnung (5, 13) zum Abgleichen des Gleichanteils durch das System hindurchgeht, wobei das System eine Anordnung (15) zum Dekodieren der duobinären Signale, einen Spitzendetektor (18, 7) zum Messen und Speichern der Signalspitzenwerte, sowie zugeordnete Mittel aufweist um, ausgehend von diesen Werten, der Abgleichanordnung ein Datenwort zur Korrektur des Gleichanteils, und dem Verstärker (4) ein Datenwort zur Regelung der Verstärkung zuzuführen, und weiterhin eine Meßanordnung (8) zum Messen der Höhe der genannten Pegel jedes Bildes sowie zugeordnete Mittel um, ausgehend von diesen Pegeln, dem Verstärker (4) einen Verstärkungsregelwert zu geben, und zum Schluß einen Wortdetektor (32) zum Wiedererkennen des Bildsynchronwortes, dadurch gekennzeichnet, daß ein Prozessor zum Steuern der jeweiligen Anordnungen nacheinander drei verschiedene Betriebsarten erzeugt, wobei eine erste Betriebsart beim Start des Systems erzeugt wird, wobei der Prozessor den Spitzendetektor und dessen zugeordnete Mittel zur Regelung der Verstärkung und des Gleichanteils in Betrieb setzt, und wobei der Prozessor den Spitzendetektor ständig im Betrieb hält, wobei eine zweite ähnliche Betriebsart erzeugt wird, in der aber der Prozessor den Spitzendetektor nur während der Perioden des duobinären Signals und während der Zeile 624 in Betrieb setzt, wobei diese Betriebsart erzeugt wird, wenn der Wortdetektor (32) ein Bildsynchronwort wiedererkannt hat, und wobei eine dritte Betriebsart erzeugt wird, in der der Prozessor die Meßanordnung zum Messen der Bildpegel und die zugeordneten Mittel in Betrieb setzen darf, wobei diese Betriebsart aktiviert wird, wenn eine Anordnung (16) zum Überprüfen der Lage eines Wortes ein Zusammentreffen eines neuen Bildsynchronwortes und eines von einem Zeitrechner (CT) zu jedem der aufeinander folgenden Zeitpunkte entsprechend den ganzen Bilddauern nach dem wiedererkannten vorhergehenden Bildsynchronwort gelieferten Signals detektiert hat.

2. System nach Anspruch 1, dadurch gekennzeichnet, daß es Mittel (14) aufweist, durch die es möglich ist, aus der zweiten oder dritten Betriebsart in die erste Betriebsart zurückzukehren, wenn durch einen Bildzähler (CT) eine bestimmte Bildzählung erreicht worden ist, ohne daß die Anordnung (16) zum Überprüfen der Lage eines Bildsynchronwortes ein Zusammentreffen detektiert hat.

3. System nach Anspruch 2, dadurch gekennzeichnet, daß es mit Rauschmeßmitteln sowie mit Mitteln zum Berechnen der genannten bestimmten Bildzählung als Funktion des Rauschpegels versehen ist.

4. System nach einem der vorstehenden Ansprüche, dadurch gekennzeichnet, daß eine Anordnung zum Durchführen des Abgleichvorganges auf Basis der Zeilenpegel von der zweiten Betriebsart her in Betrieb gesetzt wird.

5. System nach einem der vorstehenden Ansprüche, dadurch gekennzeichnet, daß das verstärkte Signal (3) mit eingestelltem Gleichanteil einem Analog-Digital-Wandler (6) zugeführt wird, dessen erzeugter Digitalwert (34) der Bildpegelhöhenmeßanordnung (8) zugeführt wird, die die Bildpegel abtastende digitale Abtastschaltungen aufweist, wobei diese Bildpegel dem Prozessor zugeführt werden um in der dritten Betriebsart daraus einen Wert abzuleiten, der einem Digital-Analog-Wandler (10) zugeführt wird, dessen erzeugtes analoges Signal einer Verstärkungsregelklemme des Verstärkers (4) zugeführt wird.

6. System nach einem der vorstehenden Ansprüche, dadurch gekennzeichnet, daß es einen analogen Spitzendetektor (18) aufweist, dessen Signale einem Summierer (20) zur Regelung der Schiebeschaltung (5) während der zwei ersten Betriebsarten, sowie einem Analog-Digital-Wandler (17) zugeführt werden, der die Spitzenwerte in digitaler Form einem Prozessor (33) zuführt, um daraus während der zwei ersten Betriebsarten einen Wert abzuleiten, der einem Digital-Analog-Wandler(10) zugeführt wird, dessen analoges Signal einer Verstärkungsregelklemme des Verstärkers (4) zugeführt wird.

7. System nach Anspruch 6, dadurch gekennzeichnet, daß es eine analog verdrahtete Abgleichschaltung (13) zum Abgleichen auf Basis der Zeilenpegel aufweist, und daß der Prozessor die dritte Betriebsart dadurch aktiviert, daß insofern es sich um die Regelung des Gleichanteils handelt, mittels eines Schalters (24) das von der Abgleichanordnung herrührende Signal statt das von der Schiebeschaltung (5) herrührende Signal gewählt wird.

8. System nach Anspruch 5, dadurch gekennzeichnet, daß der vom Analog-Digital-Wandler (6) erzeugte Wert ebenfalls dem Spitzendetektor (7) zugeführt wird, daß dieser eine die Maximal- und Minimalwerte speichernde Digitalschaltung ist, wobei diese Werte dem Prozessor (33) zugeführt werden, in dem während der ersten und zweiten Betriebsart aus ihrer Differenz ein erster Wert (35) und aus ihrer Summe ein zweiter Wert (36) abgeleitet wird, die dem genannten Digital-Analog-Wandler (10) bzw. einem zweiten Digital-Analog-Wandler (11) zugeführt werden, dessen analoges Signal einer Regelklemme der Gleichanteilschiebeschaltung (5) zugeführt wird, und daß der vom Analog-Digital-Wandler (6) erzeugte Wert ebenfalls einer digitalen Zeilenpegelmeßanordnung (9) zugeführt wird, deren gemessene Werte dem Prozessor zugeführt werden zur Aktivierung der dritten Betriebsart indem, insofern es sich um die Regelung des Gleichanteils handelt, die von der digitalen Zeilenpegelmeßanordnung (9) herrührenden Signale statt der des Spitzendetektors (7) gewählt werden um daraus den genannten zweiten Wert (36) abzuleiten.

FIG.1

FIG.2

FIG.3

FIG.4

FIG.6

FIG.5